# EUROPEAN PATENT APPLICATION

(11) **EP 1 695 614 A1**
(43) Date of publication of application: **30.08.2006**
(21) Application number: 06250966.6
(22) Date of filing: 23.02.2006
(51) Int. Cl.: A01G 25/02

(54) **Method and apparatus for the production of an irrigation mat**

(30) Priority: 23.02.2005 CA 2498070
(71) Applicant: Soleno Textiles Techniques Inc., Laval, Québec H7L 3Z1 (CA)
(72) Inventor: Théoret, Richard, Montréal, Québec H3J 1T8 (CA); Faucher, Francois, Lorraine, Québec J6Z 4J9 (CA); Pepin, Francois, Montréal, Québec H2L 2Y3 (CA)
(74) Representative: Jenkins, Peter David

(57) **Abstract**

A method and apparatus for producing an irrigation mat (10) comprised of a water impermeable base sheet (11), a water permeable top sheet (12) and a capillary mat (13) disposed between the base sheet (11) and the top sheet (12). One or more flat pliable drip tapes (19) are loosely disposed between the top sheet (12) and the capillary mat (13) and displaceable therebetween to any desirable position. The drip tape (19) is a hollow flat tube constructed of perforated plastics material and extends at least a full length of the irrigation mat (10). The irrigation mat (10) with the drip tapes (19) is capable of being rolled up upon itself to form a roll. The method and apparatus for fabricating same provide for the base sheet (11) to be folded upon opposed elongated side edges thereof to overlap the capillary mat (13) and to be heat fused thereto. The top sheet (12) is also heat fused to the folded edges of the base sheet (11).

## Description

### TECHNICAL FIELD

The present invention relates to a method and apparatus for producing an irrigation mat comprised of a base sheet, a water permeable root shielding top sheet and a capillary mat sandwiched therebetween. One or more flat pliable drip tapes may be disposed loosely over the capillary mat and which act as water conduits to supply water to the capillary mat and wherein the mat and the drip tapes can be rolled together in a bundle.

### BACKGROUND ART

Reference is made to PCT Application WO 2004/056172 filed December 23, 2002 and relating to an irrigation mat for irrigating potted plants. Water is supplied to the irrigation mat by overhead sprinklers and the mats absorb and retain water and feed the potted plants through holes formed at the bottom of the pots. The present invention is an improvement of this type of irrigation mat.

There is further described in U.S. Patent 5,839,659 a capillary root zone irrigation system utilizing an irrigation mat. The irrigation mat is also provided with a capillary cloth sandwiched between a polyethylene base sheet and a top weed mat. Water is supplied to the capillary cloth by polyethylene rigid pipes which have perforations therein. A disadvantage of such an irrigation mat is that the mat must be assembled on site with rigid water supply pipes. Accordingly, the mat may be rolled up for shipping and storage but it is up to the user to purchase perforated pipes and assemble them in pockets which are stitched along the top layer of the mat. Accordingly, the mat cannot be rolled with the pipes and must be sold separately. The construction of the mat is also expensive as one needs to stitch channels at spaced apart intervals within the mat. Often there are too many channels and too much water supplied to the mat. For long spans of mats, it is also necessary to form joints between PVC pipes to weld them together whereby to span the entire mat. This is a time-consuming job. Also, these pipes cause the mat to bulge on the top surface thereof making that part of the mat non-usable for laying pots thereover. Accordingly, it is not practical for use in nurseries.

### SUMMARY OF INVENTION

It is a feature of the present invention to provide a method and apparatus for producing an irrigation mat which substantially overcomes the above-mentioned disadvantage of the prior art and which is an improvement thereover and wherein the mat includes in combination drip tapes which are displaceable therein and which permit the mat to be rolled together with the drip tape for shipping and storage.

According to the above features and from a broad aspect of the present invention there is provided a method of constructing an irrigation mat having a water permeable synthetic top sheet, a water impermeable synthetic bottom sheet and a synthetic capillary mat retained therebetween. The method comprises the steps of providing a pair of transversely aligned rotating sealing jaws. Each pair of sealing jaws has juxtaposed displaceable clamping surfaces. The water impermeable synthetic bottom sheet is drawn through a pair of edge folders to fold an elongated sheet edge portion upwardly along opposed longitudinal edges of the bottom sheet. Simultaneously, the capillary mat is drawn over the bottom sheet between the upwardly extended elongated folded edge portions. The upwardly extending elongated folded edge portions are then folded over edge portions of the capillary mat. The bottom sheet and the capillary mat now being juxtaposed are drawn by the pair of transversely aligned rotating sealing jaws in engagement with opposed elongated edge portions and between a pair of heating elements to heat fuse the elongated folded edge portions and a rear edge portion of the bottom sheet to opposed surfaces of the synthetic capillary mat sandwiched therebetween to seal elongated edges of the capillary mat and connect the bottom sheet thereto. The bottom sheet and the capillary mat are severed transversely of opposed parallel edge portions to form a mat of desired length. The water permeable synthetic top sheet is then heat fused along opposed longitudinal edges thereof to the elongated folded portions and over the capillary mat.

According to a still further broad aspect of the present invention there is provided an irrigation mat forming apparatus comprising draw means for pulling a water impermeable back sheet over a support surface and through a pair of edge folding brackets. Each folding bracket is positioned along a respective one of opposed parallel longitudinal edges of the base sheet and has a sheet edge uprighting section and a backfolding section. The draw means further pulls a capillary mat over the water impermeable back sheet between uprighted edge portions of the water impermeable back sheet whereby the uprighted edge portions are folded back over longitudinal edge portions of the capillary mat and form a folded over flap. Sealing means is provided to compress and heat seal the folded over flap to a top portion of the capillary mat and a bottom edge portion of the water impermeable back sheet to a bottom portion of the capillary mat whereby to form a fluid seal along the longitudinal edge of the capillary mat. Cutting means is provided to affect a transverse cut to form a water retention sheet of predetermined length. Sealing means is provided to heat fuse a top water permeable sheet to the folded over flap of the water retention sheet with the water permeable sheet disposed over the capillary mat to form a composite irrigation mat. Means is further provided to position one or more drip tapes between open transverse ends of the composite irrigation mat between the water permeable sheet and the capillary mat.

### BRIEF DESCRIPTION OF DRAWINGS

A preferred embodiment of the present invention will now be described with reference to the accompanying drawings in which:
FIG. 1 is a plan view showing an irrigation mat constructed in accordance with the present invention disposed on a flat support surface;
FIG. 2 is an end view showing an irrigation mat of the present invention incorporating therein one or more water distribution drip tapes and rolled up upon itself to form an irrigation mat roll for shipping and storage;
FIG. 3 is a fragmented sectional end view showing an irrigation mat constructed in accordance with a preferred embodiment of the present invention;
FIG. 4 is a view similar to Figure 3, but showing a modification of the irrigation mat of the present invention;
FIG. 5 is a simplified schematic view showing the construction of the irrigation mat forming apparatus for forming the bottom portion of the irrigation mat comprised of the back sheet and the capillary mat with the back sheet overlapping opposed longitudinal edges of the capillary mat;
FIG. 6 is a fragmented section view showing the construction of the folding brackets and the pulling wheels;
FIG. 7 is a perspective view showing the construction of the draw means constituted by a pair of endless belts disposed in juxtaposition and incorporating therein heat sealing heads;
FIG. 8 is a simplified top view showing the operation of the folding bracket;
FIG. 9 is a simplified side view of the folding bracket; and
FIG. 10 is a fragmented section view showing the top sheet being fused to the folded-over flap of the back sheet along opposed longitudinal edges thereof.

### DESCRIPTION OF PREFERRED EMBODIMENTS

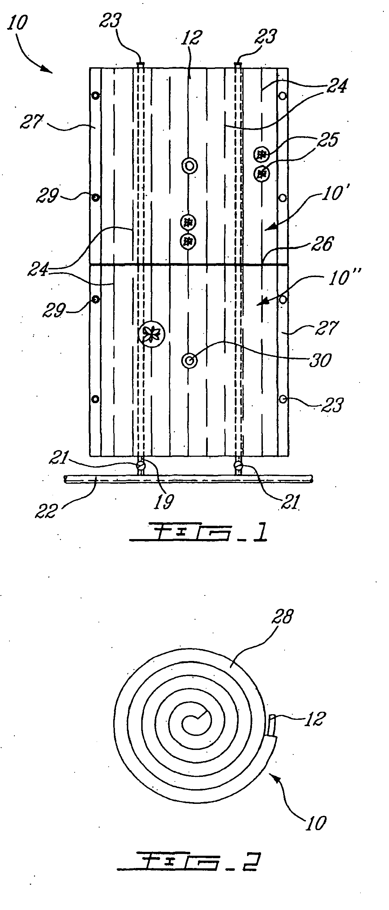

Referring to Figures 1 to 4, there is shown generally at 10, the irrigation mat of the present invention. It is comprised of a water impermeable base sheet 11, a water permeable top sheet 12 and a capillary mat 13 disposed between the base sheet and the top sheet. The capillary mat has a bottom absorbent material 13' having high capillary properties whereby to permit circulation of water in all directions therein. The top part of the capillary mat is a fluffy textile layer or any compressible material (such as a foam) 13" which is attached to the absorbent material 13', either by needle stitching or otherwise and separates the bottom absorbent material from the top sheet 12.

The base sheet 11, the top sheet 12 and the capillary mat 13 are secured together at least along opposed overlapped side edges 14 thereof by securement means in the form of heat seals 15 which seal the base sheet 11 to the bottom absorbment material 13'. A seal 16 connects a folded-over elongated edge portion 17 of the back sheet 15 to the top fluffy textile layer 13". A further seal 18 seals the top sheet 12 to the folded edge portion 17.

One or more flat pliable drip tapes 19 are disposed between the top fluffy textile layer 13" of the capillary mat and the top sheet 12. The drip tape could also be positioned under the textile layer. The drip tapes extend the entire length of the irrigation mat. These drip tapes may also be positioned over the capillary mat 13 before the top sheet 12 is heat fused to the folded edge portions of the base sheet. The drip tapes are fabricated as hollow flat plastic tubes which are perforated with holes 20 thereabout whereby to distribute water over the capillary mat 13.

As shown in Figure 1, the drip tapes 19 are provided with valve connectors or straight connectors 21 at one end which interconnect to a water distribution pipe 22. The other ends of the drip tapes 19 are provided with plugs 23. Water distribution can be controlled by either controlling the water supplied to the water distribution pipe 22 or by remotely controlling or manually controlling the valves 21. The drip tapes 19 could also be removed by the intended user and are therefore optional. They could also be sold separately.

As also shown in Figure 1, the top sheet 12 is provided with printed lines 24 to provide for the alignment of potted plants 25 disposed thereover. The top sheet 12 is a UV resistant permeable woven textile sheet which permits water to seep through the sheet while preventing plant roots from penetrating the sheet. Any permeable mechanically resistant material can be used as the top layer.

The fluffy textile top layer 13" is a compressible textile material whereby when compressed by the weight of the flat pots 25 disposed on the top sheet 12, causes water from the bottom absorbent material 13' of the capillary mat to flow into the pot by capillary attraction and penetrate into the pot through openings provided therein and not hereinshown but forming part of the above-referred to PCT application. The capillary mat 13 has a water holding capacity of up to 2.5 gallons per square yard (11.6 liters per square meter). The base sheet 11 is a water impermeable sheet constructed of polyethylene film material.

As also shown in Figure 1, the irrigation mat 10 may be comprised by two or more distinct mat sections 10' and 10" which are disposed side-by-side and interconnected by a fused joint 26 formed between opposed back sheets and opposed top sheets. Each mat sections 10' and 10" may have a length of about 10 feet and create individual water retention cells which are useful in preventing the transmission of foliar disease from one cell to the other and to maintain good water distribution on sloping surfaces. The drip tapes as herein shown are one-inch wide tapes and have a drip flow rate of for example: 1.5 gallons per minute per 100 linear feet, more or less.

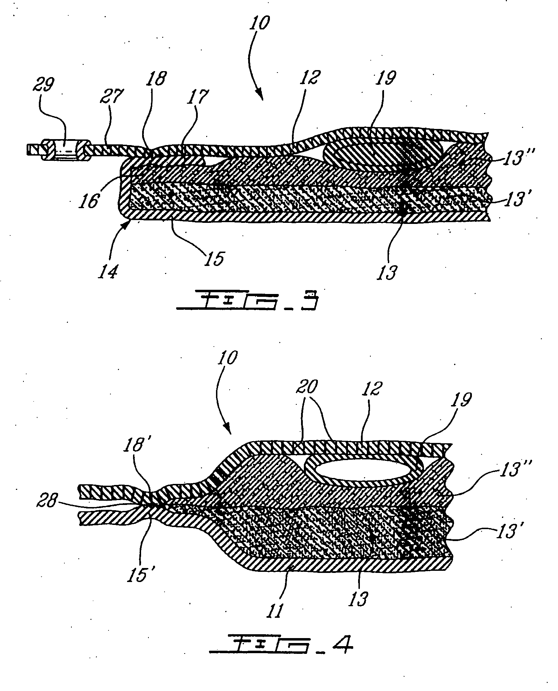

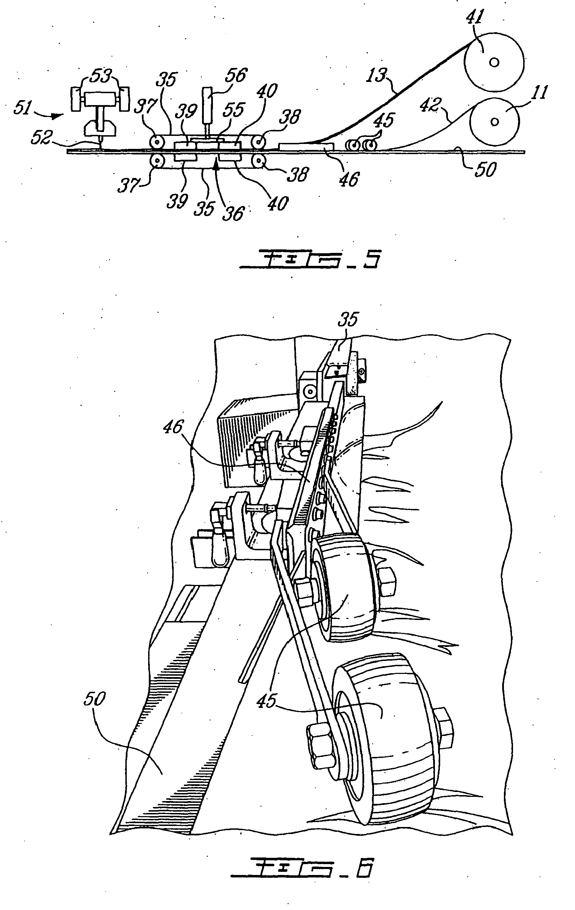

As also shown in Figures 1 and 3, the top sheet 12 defines an extension flap 27 extending beyond the weld seam or the seal 18 and are provide with ferrule ring connectors 29 for attachment of the irrigation mat by attachment means, such as large nails or pegs or screws, to secure the mat on a support surface. The support surface may be a ground surface or a support bench. The top sheet flap 27 can also be turned about the overlapped side edge 14 and welded to the base sheet 11.

An advantage of the construction of the irrigation mat of the present invention with the integrated drip tapes is that the mat can be rolled up upon itself to form a roll 28 as illustrated in Figure 2. Accordingly, these rolls are easily storable, are easy to ship and the user does not require assembly other than to connect plugs 23 and connectors 19 to interconnect the mat to water distribution pipes. The mat of the present invention is also economical to construct and the drip tapes are displaceable to any desired position between the top sheet and the capillary mat.

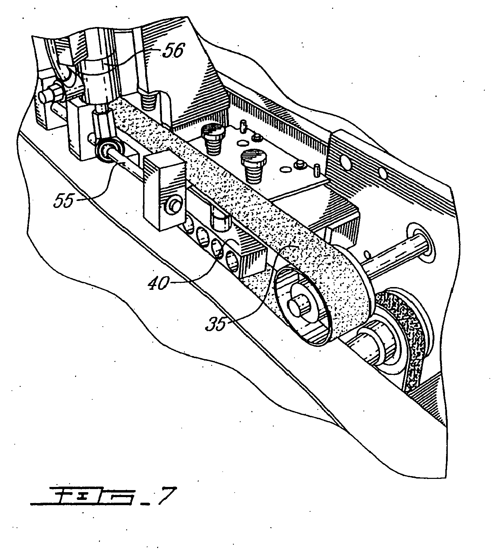

In the embodiment as shown in Figure 4, the top sheet 12 may be connected directly to the capillary mat 13 by a heat weld seam 18' whereby the top sheet 12 melts into the fluffy synthetic textile top layer 13" of the capillary mat. A similar heat fuse seam 15' may be formed with the bottom sheet 11 fused into the bottom absorbent material 13" of the synthetic capillary material. This forms a compressed seal area 28 substantially preventing water from seeping out from opposed side edges of the irrigation mat.

Similar ferrules may be connected in the irrigation mat such as shown at 30 whereby to form a channel between the top and bottom sheets to expel water collecting on the mat whereby the water can seep through the mat and onto the ground or other support surface. The ferrule ring connectors 30 may be provided at spaced intervals over the surface of the mat sections.

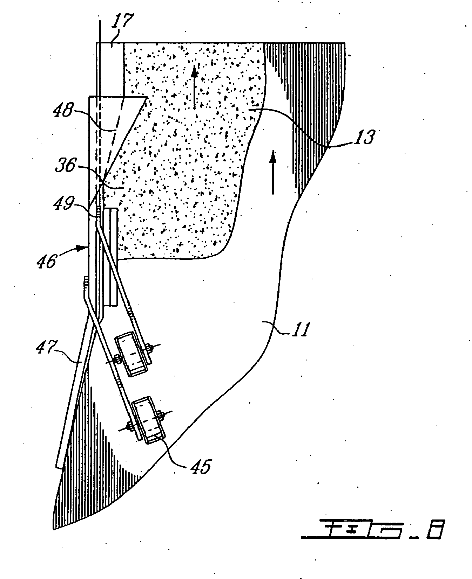

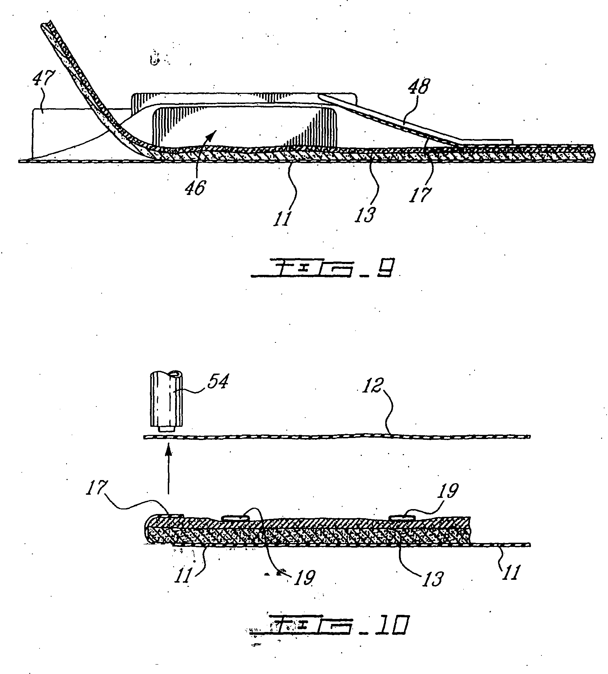

With reference now to Figures 5 to 10 there will be described the irrigation mat forming apparatus and method of operation. As shown in Figure 5, the apparatus comprises drawing means in the form of a pair of endless belts 35 and 35' disposed in juxtaposition with one another and aligned with an edge portion 36 (see Figure 8) of the capillary mat 13 and the folded edge portions or flap 17 of the base sheet 11. The juxtaposed endless belts 35 have straight drawing sections 36 between which the edge portion 36 and folded-over flap 17 are frictionally engaged whereby to draw the back sheet and the capillary mat simultaneously therethrough. The endless belts 35 are trained about a pair of drums 37 and 38 respectively. The belts 35 are Teflon belts or Teflon coated belts for the reason that there is provided heat sealing heads 39 and 40 disposed in contact with the belts in their straight drawing sections 36 whereby to form the heat fusing seals 15 and 17 as previously described. The Teflon belts provide for heat transfer and are non-adherent to melted plastics material. There is of course a pair of endless belts disposed along opposed side edges of the sheets of material fed through this machine.

As hereinshown, the capillary material 13 is provided in a roll form 41 and the base sheet 11 is also provided in a roll 41. In order to engage these sheets together, it is first necessary to position opposed side edge portions of the base sheet 11 under a pair of idle wheels 45 which are disposed at angles, as shown in Figure 6, and aligned towards the opposed side edges of the back sheet. An upwardly folded edge portion on opposed sides of the back sheet are then placed into folding brackets 46, respectively, which are positioned along a respective one of opposed parallel longitudinal edges of the base sheet. These folding brackets 46 are better illustrated in Figures 8 and 9 and as thereinshown, each bracket has an uprighted edge section 47 and a back folding section 48. Once the sheet is engaged by the endless belts, they pull the capillary mat over the water impermeable back sheet 11 between the uprighted edge portions 49 of the back sheet 11 whereby the uprighted edge portions 49 are then folded back over longitudinal edge portions 36 of the capillary mat and form the folded over flap 17. The sealing then takes place by the sealing heads associated with the endless belts which also constitutes the drive or the pulling means of the machine. The idle wheels 45 also constitute pulling means in that they are disposed over the support surface 50 of the machine and apply pressure thereagainst. These idle wheels are disposed at an angle over the back sheet in the direction of the folding brackets 46 whereby to maintain the opposed parallel longitudinal edges of the back sheet aligned with the respective folding brackets. As previously described, the folded-over side edges of the back sheet form a fluid seal along longitudinal edges of the capillary mat. It is foreseen that valves could be connected in the sealed side edges or at any other location in the base sheet. After the base sheet has been sealed to the capillary mat on opposed sides thereof, the bottom portion of the irrigation mat 10 is then cut to a desired length and this may be effected by a slitting device 51 provided with a slicing knife 52 and displaceable transversely on a support 53. It can be automatically or manually operated. The transverse cut can also be done entirely manually with a hand tool.

The next step in the assembly is to dispose the drip tapes 19 over the capillary mat 13 as illustrated in Figure 10 and then heat fusing the top sheet 12 by a heat fusing device 54. The construction of the irrigation mat 10 of the present invention is thus complete.

Summarizing the method of construction of the irrigation mat 10 of the present invention it consists of providing a pair of transversely aligned rotating sealing jaws with each pair of jaws having juxtaposed displaceable clamping surfaces. These clamping surfaces are provided by the straight drawing sections 36 of the endless belts 35. The water impermeable synthetic bottom sheet 11 is drawn through a pair of edge folders 46 to fold an elongated sheet edge portion upwardly along opposed longitudinal edges of the bottom sheet 11. Simultaneously, the capillary mat 13 is drawn over the bottom sheet in juxtaposition therewith and between the upwardly extending elongated folded edge portions. The edge portions are then folded inwardly over edge portions of the capillary mat. The bottom sheet and the capillary mat which are juxtaposed are then drawn by the pair of endless belts and through heating elements to heat fuse the elongated folded edge portions and the rear edge portion of the bottom sheet to opposed surfaces of the synthetic capillary mat which is sandwiched therebetween whereby to seal elongated edges of the capillary mat and connect the bottom sheet thereto. The bottom sheet and the capillary mat are then severed transversely of opposed parallel edge portions thereof to form a mat of desired length. The water permeable synthetic top sheet is then heat fused along opposed longitudinal edges thereof to the elongated folded portions or flap 17 of the back sheet. The flat pliable drip tapes are then loosely disposed over the capillary mat and the top sheet is fused to the folded-over edge flaps as previously described. When the back sheet 11 and capillary mat 13 are assembled through the endless belts, it is necessary to withdraw the top endless belt to provide access between these belts and this is done by connecting the top belt assembly to a carriage 55 which is retractable by a piston 56, as shown in Figure 5.

To be able to fabricate irrigation mats of different widths the devices for drawing, sealing and folding the bottom sheet and capillary mat are displaceably mounted to the machine.

It is within the ambit of the present invention to cover any obvious modifications of the preferred embodiment described herein, provided such modifications fall within the scope of the appended claims.

## Claims

1. A method of constructing an irrigation mat having a water permeable synthetic top sheet, a water impermeable synthetic bottom sheet and a synthetic capillary mat retained therebetween, said method comprising the steps of:
i. providing a pair of transversely aligned rotating sealing jaws, each pair of said jaws having juxtaposed displaceable clamping surfaces;
ii. drawing said water impermeable synthetic bottom sheet through a pair of edge folders to fold an elongated sheet edge portion upwardly along opposed longitudinal edges of said bottom sheet;
iii. simultaneously drawing said capillary mat over said bottom sheet between said upwardly extending elongated folded edge portions;
iv. folding said upwardly extending elongated folded edge portions over edge portions of said capillary mat;
v. drawing said bottom sheet and said capillary mat juxtaposed by said pair of transversely aligned rotating sealing jaws in engagement with opposed elongated edge portions and between a pair of heating elements to heat elongated folded edge portions and a rear edge portion of said bottom sheet to opposed surfaces of said synthetic capillary mat sandwiched therebetween to seal elongated edges of said capillary mat and connect said bottom sheet thereto;
vi. severing said bottom sheet and capillary mat transversely of opposed parallel edge portions to form a mat of desired length; and
vii. heat fusing said water permeable synthetic top sheet along opposed longitudinal edges thereof to said elongated folded portions and over said capillary mat.

2. A method as claimed in claim 1 wherein there is further provided the step of (viii) positioning one or more flat pliable drip tapes loosely disposed across said mat between said top sheet and said synthetic capillary mat and accessible between opposed open ends of said mat.

3. A method as claimed in claim 1 wherein there is further provided the steps of providing a roll of each said bottom sheet and said capillary mat, guiding said sheet and mat juxtaposed into a throat of said rotating sealing jaws.

4. A method as claimed in claim 3 wherein said rotating sealing jaws each comprise a pair of endless narrow belts of non-stick material rotatably driven between a pair of spaced driven drums, each heating element of said pair of heating elements being supported in contact with an inner surface of each said belt between their associated driven drums along adjacent parallel track paths of said belts closely spaced from one another to define a compressing heated sealing area, said opposed endless narrow belt of each said sealing jaws drawing said opposed folded edge portions of said bottom sheet with said edge portions of said capillary mat sandwiched therebetween through said compressing heated sealing area.

5. A method as claimed in claim 4 wherein one of said rotating sealing jaws is secured to a carriage for adjusting the distance between said pairs of rotating sealing jaws to seal opposed parallel edge portions of said juxtaposed bottom sheet and capillary mat of different widths.

6. An irrigation mat forming apparatus comprising draw means for pulling a water impermeable back sheet over a support surface and through a pair of edge folding brackets, each said folding bracket being positioned along a respective one of opposed parallel longitudinal edges of said base sheet and having a sheet edge uprighting section and a backfolding section, said draw means further pulling a capillary mat over said water impermeable back sheet between uprighted edge portions of said water impermeable back sheet whereby said uprighted edge portions are folded back over longitudinal edge portions of said capillary mat and forming a folded-over flap, sealing means to compress and heat seal said folded-over flap to a top portion of said capillary mat and a bottom edge portion of said water impermeable back sheet to a bottom portion of said capillary mat whereby to form a fluid seal along said longitudinal edge of said capillary mat, cutting means to effect a transverse cut to form a water retention sheet of predetermined length, and sealing means for heat fusing a top water permeable sheet to said folded-over flap of said water retention sheet with said water permeable sheet disposed over said capillary mat to form a composite irrigation mat, and means to position one or more drip tapes between open transverse ends of said composite irrigation mat between said water permeable sheet and said capillary mat.

7. An irrigation mat forming apparatus as claimed in claim 6 wherein said draw means is constituted by a pair of endless belts disposed in juxtaposition and aligned with an edge portion of said capillary mat with said folded over flap of said back sheet to frictionally engage same between straight drawing sections of said endless belts, said belts being trained about a pair of drums one of which is a driven drum.

8. An irrigation mat forming apparatus as claimed in claim 7 wherein said sealing means is constituted by a heat sealing head biased against a portion of said straight drawing section on a rear side of each said section of said juxtaposed endless belts, said endless belts being constructed of heat transfer material and non-adherent to melted plastics material, said water impermeable back sheet being a polyethylene sheet.

9. An irrigation mat forming apparatus as claimed in claim 8 wherein said endless belts are constructed of Teflon material.

10. An irrigation mat forming apparatus as claimed in claim 6 wherein there is further provided pulling means to laterally pull said water impermeable back sheet transversely towards said opposed parallel longitudinal edges prior to entering said folding brackets.

11. An irrigation mat forming apparatus as claimed in claim 10 wherein said pulling means are each constituted by idle wheels disposed over said support surface at an angle over said back sheet in the direction of said folding brackets whereby to maintain said opposed parallel longitudinal edges aligned with their respective folding bracket.

12. An irrigation mat forming apparatus as claimed in claim 6 wherein there is further provided means to form a transverse connection seam between transverse ends of two or more of said composite irrigation mats to form an elongated irrigation mat with mat sections, said drip tape extending the entire length of said elongated irrigation mat.

13. An irrigation mat forming apparatus as claimed in claim 6 wherein there is further provided adjustable support means to adjust the position of said draw means, sealing means and folding brackets disposed along one of opposed edges of said back sheet and said capillary mat to form irrigation mats of different widths.
